# FASCICULE DE BREVET EUROPEEN

(11) **EP 3 042 071 B1**
(45) Date de publication et mention de la délivrance du brevet: **04.12.2019**
(21) Numéro de dépôt: 14766407.2
(22) Date de dépôt: 29.08.2014
(51) Int. Cl.: H02K 1/06, H02K 3/04, H02K 5/12, H02K 5/20, H02K 9/00, F03B 3/04, F03B 13/10, H02K 7/18

(54) **DISPOSITIF DE GENERATION DE COURANT POUR CANALISATION**
VORRICHTUNG ZUR STROMERZEUGUNG FÜR EIN ROHR
DEVICE FOR GENERATING A CURRENT FOR A PIPE

(30) Priorité: 05.09.2013 FR 1358527
(43) Date de publication de la demande: 13.07.2016
(73) Titulaire: SAVE Innovations, 38000 Grenoble (FR)
(72) Inventeur: PERRIERE, Bernard, F-38180 Seyssins (FR)
(74) Mandataire: Novaimo
(86) Numéro de dépôt international: PCT/EP2014/068357
(87) Numéro de publication internationale: WO 2015/032697

(56) Documents cités:
- WO-A1-2005/080790
- US-A1- 2007 145 751
- US-A1- 2010 148 515
- US-A1- 2012 007 364

## Description

### Domaine technique de l'invention

L'invention concerne le domaine de la génération de courant notamment à partir de l'écoulement d'un fluide dans une conduite ou une canalisation.

L'invention a pour objet plus particulièrement un dispositif de génération d'un courant électrique, ledit dispositif étant destiné à former une partie d'une canalisation de circulation d'un fluide, notamment liquide.

Un autre objet selon l'invention est relatif à un kit permettant d'instrumentaliser une canalisation avec un dispositif de génération de courant électrique.

Encore un autre objet de l'invention est relatif à une installation munie d'une canalisation de circulation d'un fluide dans laquelle le fluide circule, ladite canalisation comportant au moins un dispositif de génération de courant électrique à partir de la circulation du fluide au sein de la canalisation.

### État de la technique

Dans le domaine de l'électricité générée à partir des énergies renouvelables comme l'eau, il est commun de canaliser l'eau d'un barrage dans une grande conduite de plusieurs mètres de diamètre afin d'entrainer une turbine disposée dans la canalisation. Ces technologies sont généralement installées dans des centrales dites hydroélectriques.

Dans les centrales hydroélectriques, il existe des turbines dont le stator et le rotor sont disposés dans le flux principal de l'eau canalisée, la présence du stator perturbe le fluide et limite le rendement. De plus, dans ce cas, l'axe de rotation du rotor est accouplé au stator, il en résulte une problématique d'étanchéité en plein centre de la canalisation.

Alternativement, il existe aussi des centrales hydroélectriques dont le rotor situé dans la canalisation comporte un axe de rotation accouplé à un stator hors de ladite canalisation en vue de générer le courant électrique (voir par exemple WO 2005/080790). Ici encore, les contraintes imposent l'installation de dispositifs d'étanchéité importants.

Outre les problèmes visés ci-dessus, ces solutions ne sont pas adaptées aux canalisations de tout type de taille, notamment elles ne peuvent pas convenir à des canalisations d'alimentation en fluide d'un bâtiment.

### Objet de l'invention

Le but de la présente invention est de proposer une solution qui remédie à tout ou partie des inconvénients listés ci-dessus.

On tend vers ce but grâce à un dispositif de génération d'un courant électrique destiné à former une partie d'une canalisation de circulation d'un fluide, notamment liquide, ledit dispositif comportant un élément de tuyau, un rotor apte a être mis en mouvement par le fluide lors de son passage dans ledit dispositif et un stator agencé pour coopérer avec une extrémité du rotor opposée à un axe de rotation dudit rotor afin de générer le courant électrique lors dudit mouvement, ledit axe de rotation étant monté à ses extrémités longitudinales opposées sur des premier et deuxième supports disposés de part et d'autre du plan de rotation du rotor et chacun relié à l'élément de tuyau. Par ailleurs, le stator comporte avantageusement au moins un anneau disposé d'un côté du rotor, notamment deux anneaux disposés de part et d'autre du rotor, et chaque anneau peut comporter un circuit apte à générer tout ou partie du courant électrique lorsqu'il est excité par au moins un élément magnétique du rotor.

Préférentiellement, le dispositif comporte un logement dans lequel sont disposés le rotor et le stator, l'élément de tuyau comprenant une première partie de tuyau et une deuxième partie de tuyau disposées de part et d'autre du logement, notamment les première et deuxième parties de tuyau sont coaxiales entre elles et avec l'axe de rotation du rotor.

Selon une réalisation particulière, le dispositif comporte des première et deuxième coquilles assemblées, de préférence de manière démontable, l'une à l'autre de sorte à former le logement, la première coquille comporte la première partie de tuyau et la deuxième coquille comporte la deuxième partie de tuyau.

Selon une mise en œuvre, le stator est agencé de sorte qu'une partie du fluide participe au refroidissement dudit stator lors de son passage dans ledit dispositif.

Selon un exemple de ladite mise en œuvre, au moins un passage est aménagé dans le stator de sorte à le refroidir en permettant une circulation de la partie de fluide au travers dudit passage. De préférence, le circuit de chaque anneau comporte au moins une bobine, ledit au moins un passage étant formé le long de l'axe de bobinage de ladite bobine.

Selon un autre exemple de ladite mise en œuvre, le stator présente une surface extérieure, notamment disposée en regard du rotor, en contact avec ladite partie de fluide et permettant un refroidissement par convection.

Avantageusement, au moins une extrémité longitudinale de l'axe de rotation, en contact avec le premier, ou le deuxième, support correspondant est distante du plan de rotation du rotor d'une distance supérieure ou égale au rayon du rotor.

Selon la présente invention, le premier support et/ou le deuxième support comporte un système de réglage de la distance de séparation des premier et deuxième supports, notamment en vue de régler la position du plan de rotation du rotor entre les premier et deuxième supports.

Selon une réalisation, le premier support comporte une surface de contact avec l'axe de rotation du rotor formée par une partie d'une surface sphérique, notamment délimitée par une bille intégrée au premier support, et le deuxième support comporte une deuxième surface de contact avec l'axe de rotation du rotor formée par une partie d'une surface sphérique, notamment délimitée par une autre bille intégrée au deuxième support.

Par exemple, les premier et deuxième supports comportent chacun une cavité s'étendant entre la première surface de contact, respectivement la deuxième surface de contact, et une ouverture associée permettant l'insertion d'une partie correspondante de l'axe de rotation, chaque cavité comprenant un premier tronçon de section cylindrique et un deuxième tronçon de forme, de préférence conique, s'évasant à partir du premier tronçon en direction de l'ouverture, et, pour chaque cavité, ladite partie correspondante de l'axe de rotation est logée dans ladite cavité et présente une forme complémentaire à ladite cavité.

Selon un autre perfectionnement, le dispositif comporte un système de maintien de l'écartement des deux anneaux disposés de part et d'autre du plan de rotation du rotor. Par exemple, le système de maintien comporte une entretoise reliant les deux anneaux notamment l'entretoise comporte deux parties chacune solidaire d'un anneau correspondant.

L'invention est aussi relative à un kit pour instrumentaliser une canalisation comportant un dispositif tel que décrit, ledit dispositif étant démontable, le kit comporte au moins deux types de stator et/ou au moins deux types de rotor.

L'invention est aussi relative à une installation munie d'une canalisation de circulation d'un fluide dans laquelle le fluide circule, ladite canalisation comporte au moins un dispositif de génération de courant électrique tel que décrit.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un dispositif de génération de courant selon un exemple de réalisation de l'invention,
- la figure 2 est une vue en coupe longitudinale du dispositif de la figure 1,
- la figure 3 est une vue en perspective éclatée de la figure 1,
- la figure 4 est une vue en coupe longitudinale de la figure 3,
- la figure 5 est une vue détaillé d'un mode de réalisation particulier d'un support de l'axe de rotation,
- la figure 6 donne un exemple d'intégration du dispositif au sein d'une canalisation,
- la figure 7 illustre une vue en coupe transversale de la figure 1 selon un mode de réalisation particulier permettant de fixer l'écartement entre deux anneaux du stator,
- la figure 8 illustre une vue partielle d'un anneau du stator selon une réalisation particulière.

### Description de modes préférentiels de l'invention

Le dispositif de génération de courant décrit ci-après diffère de l'état de la technique par sa structure, notamment par l'agencement du rotor par rapport au stator, et en particulier sur le maintien de l'axe de rotation du rotor.

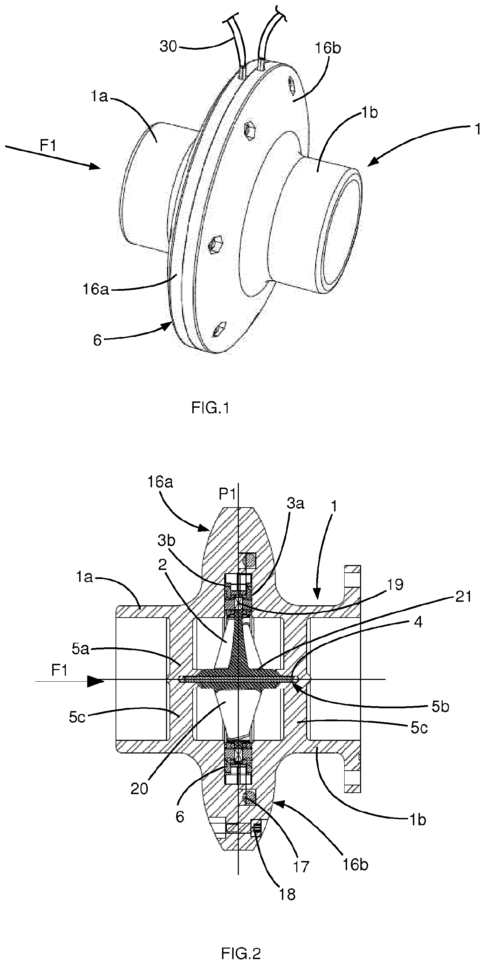

Les figures 1 à 4 illustrent un dispositif de génération d'un courant électrique destiné à former une partie d'une canalisation de circulation d'un fluide. Le fluide est notamment un liquide, et plus particulièrement de l'eau. Bien entendu, tout autre type de fluide apte à entrainer la rotation d'un rotor peut aussi être utilisé.

Par « canalisation de circulation d'un fluide » on entend par exemple un ensemble de tubes ou de tuyaux destinés au transport à distance ou à la distribution du fluide.

L'écoulement du fluide au sein de la canalisation est généralement contraint, par exemple par une pompe.

Le dispositif comporte un élément de tuyau 1 et un rotor 2 apte à être mis en mouvement par le fluide lors de son passage dans ledit dispositif, en particulier dans l'élément de tuyau 1. Typiquement, le fluide traverse le dispositif selon un sens découlement indiqué par la flèche F1.

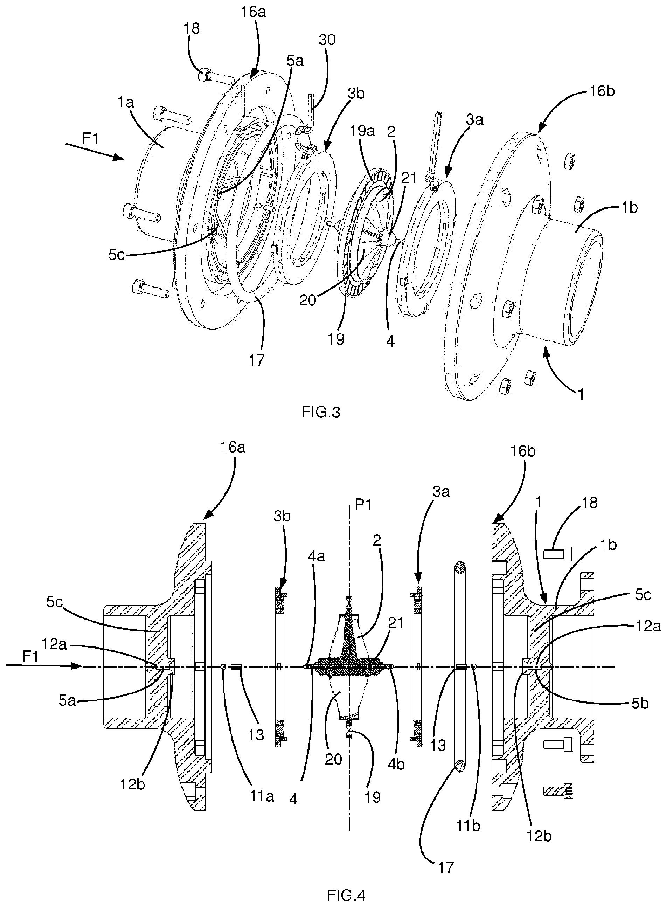

Un stator 3a, 3b du dispositif est agencé pour coopérer avec une extrémité du rotor 2 opposée à un axe de rotation 4 dudit rotor 2 afin de générer le courant électrique lors dudit mouvement. Autrement dit, le dispositif comporte un plan de rotation P1 du rotor 2 (perpendiculaire au plan de la figure aux figures 2 et 4). Le plan de rotation P1 est défini comme le plan incluant un cercle décrit par le rotor 2 lorsque ce dernier est en rotation. Lorsque le fluide passe dans ledit dispositif, sa direction d'écoulement est telle qu'elle est sécante au plan de rotation du rotor, et de préférence perpendiculaire au plan de rotation du rotor.

Le rotor 2 se comporte donc comme un inducteur et le stator 3a, 3b comme un induit. De préférence, l'association rotor/stator est du type à flux magnétique axial.

On comprend alors de ce qui a été dit ci-dessus que lorsque le rotor 2 comporte une hélice, le stator 3a, 3b coopère avec l'extrémité du rotor 2 au niveau du point de grand diamètre de l'hélice. De préférence, le stator comporte des parties ou anneaux disposés de part et d'autre de l'hélice dans le cas du flux magnétique axial ou une partie disposée dans le prolongement de l'hélice dans le cas d'un flux magnétique radial.

Selon une telle structure, le stator 3a, 3b peut être déplacé hors du flux principal du fluide au centre du dispositif, et n'induit pas de perte de charge dudit fluide comme dans l'art antérieur. De plus, ici l'axe de rotation 4 du rotor 2 n'est pas utilisé pour être accouplé mécaniquement au stator 3a, 3b en vue de générer le courant, il en résulte que le rotor 2 n'est pas freiné par le stator du fait de l'accouplement. De plus, avantageusement, la zone de génération du courant électrique (zone d'interaction entre le stator et le rotor) n'est pas comprise dans le prolongement de l'élément de tuyau 1 de sorte que le stator 3a, 3b n'entrave pas le passage du fluide.

En outre, l'axe de rotation 4 est monté à ses extrémités longitudinales opposées 4a, 4b (visibles à la figure 4) sur des premier et deuxième supports 5a, 5b disposés de part et d'autre du plan de rotation P1 du rotor 2 et chacun relié à l'élément de tuyau 1. Ceci permet de contraindre au mieux le positionnement du plan de rotation P1 du rotor 2 afin d'éviter à ce dernier de venir taper dans le stator 3a, 3b en cas de perturbation dans le fluide traversant ledit dispositif. Typiquement, les premier et deuxième supports 5a, 5b peuvent chacun être relié à l'élément de tuyau 1 par au moins un élément de liaison 5c mécanique fixé directement sur le support 5a, 5b, concerné, et d'autre part sur l'élément de tuyau 1 (en particulier au niveau d'une surface intérieure de l'élément de tuyau), l'élément de liaison mécanique 5c peut être une tige ou un hauban.

L'axe de rotation 4 du rotor est préférentiellement fixe par rapport au reste du rotor 2. En outre, l'axe de rotation 4 peut être est contraint entre ses deux extrémités longitudinales 4a, 4b opposées par les premier et deuxième supports 5a, 5b de sorte à inhiber la translation du rotor 2 selon la direction de l'axe de rotation 4.

De préférence, le dispositif comporte un logement 6 dans lequel sont disposés le rotor 2 et le stator 3a, 3b. L'élément de tuyau 1 comprend alors une première partie de tuyau 1a et une deuxième partie de tuyau 1b disposées de part et d'autre du logement 6. Notamment, les première et deuxième parties de tuyau 1a, 1b sont coaxiales entre elles et avec l'axe de rotation 4 du rotor 2. Ce positionnement particulier permet d'assurer un meilleur maintien du positionnement du rotor 2 au sein du dispositif du fait que les perturbations induites par l'écoulement du fluide seront minimisées. On comprend alors que lorsque le fluide traverse le dispositif, il passe successivement dans la première partie de tuyau 1a, le logement 6 où il met en mouvement le rotor 2, et enfin dans la deuxième partie de tuyau 1b. Le logement 6 forme extérieurement une saillie annulaire séparant les première et deuxième parties de tuyau 1a, 1b, c'est avantageusement dans cette saillie annulaire qu'est logé le stator 3a, 3b afin que ce dernier n'entrave pas le passage du fluide dans le logement 6 dans le prolongement de la première partie de tuyau 1b situé entre ladite première partie de tuyau 1a et la deuxième partie de tuyau 1b.

Toujours dans l'expectative d'assurer un bon maintien du positionnement du plan de rotation P1 du rotor 2, au moins une extrémité longitudinale de l'axe de rotation 4, en contact avec le premier, ou le deuxième, support 5a, 5b correspondant est préférentiellement distante du plan de rotation P1 du rotor 2 d'une distance supérieure ou égale au rayon du rotor 2. Bien que cet agencement soit préféré, il est aussi possible de réaliser le dispositif de telle sorte que ladite distance soit inférieure au rayon du rotor 2. De préférence, les deux extrémités longitudinales opposées 4a, 4b de l'axe de rotation 4, respectivement en contact avec le premier et le deuxième support 5a, 5b sont chacune distante du plan de rotation P1 du rotor 2 d'une distance supérieure ou égale au rayon du rotor 2. Comme évoqué précédemment, ces deux extrémités longitudinales opposées 4a, 4b sont, de préférence, contraintes entre les premier et deuxième supports 5a, 5b.

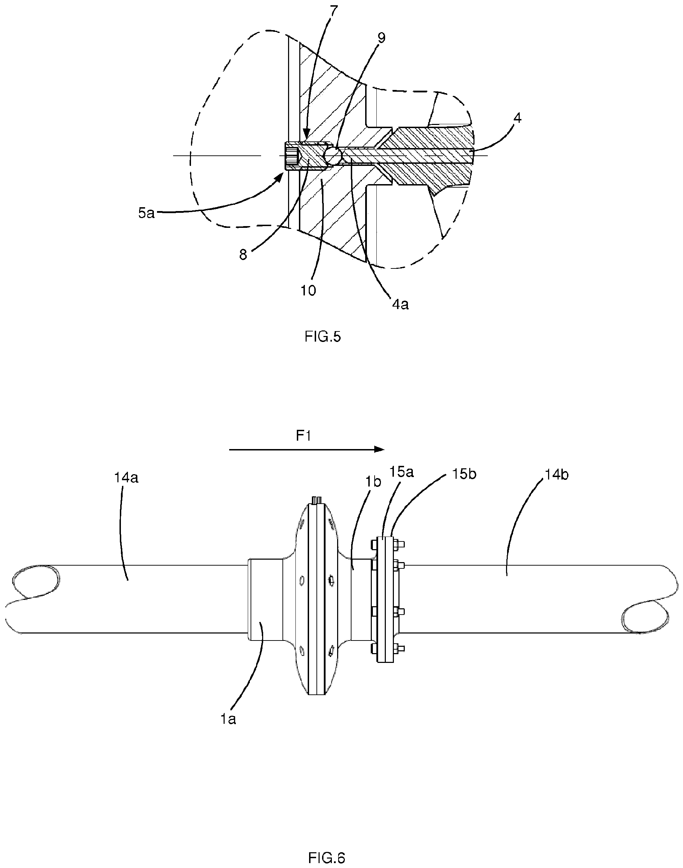

On comprend de ce qui a été dit ci-dessus que les premier et deuxième supports 5a, 5b peuvent avoir un rôle à jouer quant au positionnement du rotor 2, en particulier en vue de positionner son plan de rotation P1. En ce sens, il est avantageux de pouvoir ajuster le positionnement du plan de rotation du rotor 2, ou encore de pouvoir rattraper un jeu de fabrication dans la longueur de séparation des deux supports 5a, 5b de sorte à inhiber la translation de l'axe de rotation 4 et donc du plan de rotation P1 (en particulier un jeu de fabrication dans la longueur de séparation de surfaces de contact des deux supports 5a, 5b destinées à contraindre l'axe de rotation 4 pour en éviter la translation selon sa direction d'allongement). Ainsi, comme illustré à la figure 5 le premier support 5a et/ou le deuxième support peut comporter un système de réglage 7 de la distance de séparation des premier et deuxième supports 5a, 5b, notamment en vue de régler la position du plan de rotation P1 du rotor 2 entre les premier et deuxième supports 5a, 5b. Ce système de réglage 7 peut par exemple comporter un organe 8 de réglage apte à translater une surface de contact 9 du support 5a concerné avec l'extrémité longitudinale 4a de l'axe de rotation 4 selon la direction dudit axe de rotation 4. En fait, l'organe de réglage 8 et une partie 10 du support concerné 5a peuvent chacun comporter un filet, les filets étant complémentaire pour permettre le vissage et/ou le dévissage de l'organe de réglage 8 sur la partie 10 du support 5a. Ce qui vient d'être décrit s'applique indifféremment au premier support 5a ou au deuxième support 5b. De plus, on comprend que pour un réglage le plus fin possible du positionnement du plan de rotation, il est préférable que les premier et deuxième supports 5a, 5b soient tous les deux pourvus d'un tel système de réglage 7 (notamment vu que la distance séparant les deux extrémités longitudinales opposées 4a, 4b de l'axe de rotation 4 reste quant à elle fixe).

De manière générale, le premier support 5a peut comporter une surface de contact avec l'axe de rotation 4 du rotor 2 formée par une partie d'une surface sphérique, notamment délimitée par une bille 11a (figure 4) intégrée au premier support 5a, et le deuxième support 5b peut comporter une deuxième surface de contact avec l'axe de rotation 4 du rotor 2 formée par une partie d'une surface sphérique, notamment délimitée par une autre bille 11b (figure 4) intégrée au deuxième support 5b. L'avantage de l'utilisation de telles surfaces est de limiter les surfaces de contact entre l'axe de rotation 4 et les supports 5a, 5b afin de limiter les forces s'opposant à la rotation du rotor 2. On comprend alors que l'axe de rotation 4 est bridé en translation selon sa direction longitudinale par les premier et deuxième supports 5a, 5b, et en particulier par les première et deuxième surfaces tout en permettant sa rotation lors du mouvement du fluide. En combinaison avec le système de réglage, la distance de séparation que l'on cherche à régler est celle entre les première et deuxième surfaces de contact.

De manière avantageuse, les premier et deuxième supports 5a, 5b comportent chacun une cavité s'étendant entre la première surface de contact, respectivement la deuxième surface de contact, et une ouverture associée permettant l'insertion d'une partie correspondante de l'axe de rotation 4. Chaque cavité (figure 4) comprend un premier tronçon 12a de section cylindrique, s'étendant notamment à partir de la surface de contact associée, et un deuxième tronçon 12b de forme, de préférence conique, s'évasant à partir du premier tronçon 12a en direction de l'ouverture. De préférence, la partie correspondante de l'axe de rotation 4 est logée dans la cavité et présente une forme complémentaire à ladite cavité. En particulier, une bague 13, préférentiellement en laiton, entoure la partie cylindrique de l'axe de rotation 4 complémentaire au tronçon cylindrique. Cette bague 13 est avantageusement fixée au support correspondant. Le rôle de la bague 13 est de limiter les frictions et d'éviter le graissage. Le matériau formant la bague 13 est un matériau qui ne rouille pas, et qui est de préférence inerte par rapport au fluide. Le deuxième tronçon 12b permet quant à lui, du fait de sa forme, de faciliter l'insertion de l'axe de rotation 4 dans la cavité lors du montage du dispositif.

Comme illustré à la figure 6, la première partie de tuyau 1a est configurée de sorte à être fixée à un élément de tuyau amont 14a selon le sens d'écoulement F1 du fluide, et la deuxième partie de tuyau 1b est configurée de sorte à être fixée à un élément de tuyau aval 14b selon le sens d'écoulement F1 du fluide. Sur l'exemple de la figure 6, la première partie de tuyau 1a est configurée de sorte à être manchonnée par l'élément de tuyau amont 14a et la deuxième partie de tuyau 1b comporte une excroissance 15a configurée pour coopérer, notamment par bridage, avec une excroissance correspondante 15b de l'élément de tuyau aval 14b. Bien entendu l'exemple particulier n'est pas limitatif, par exemple les fixations peuvent être inversée, les première et deuxième parties de tuyau 1a, 1b peuvent être fixées respectivement à l'élément de tuyau amont 14a et à l'élément de tuyau aval 14b par manchonnage ou par bridage.

Selon une réalisation particulière illustrée aux figures 1 à 4, le dispositif comporte des première et deuxième coquilles 16a, 16b assemblées, de préférence de manière démontable, l'une à l'autre de sorte à former le logement 6, la première coquille 16a comporte la première partie de tuyau 1a et la deuxième coquille 16b comporte la deuxième partie de tuyau 1b. Ces coquilles facilitent l'assemblage du dispositif, et permettent une maintenance plus adaptée en cas de problème du dispositif de génération de courant en facilitant son démontage. En effet, en configuration désassemblée, il peut être possible d'interchanger le rotor 2 et/ou le stator 3a, 3b. Par exemple chaque coquille 16a, 16b comporte une empreinte permettant de loger une partie du stator 3a, 3b.

Par exemple, l'étanchéité de l'assemblage des deux coquilles 16a, 16b est réalisée par un joint 17 (figures 2 à 4), notamment un joint torique interposé entre les deux coquilles 16a, 16b. La fixation de l'assemblage des deux coquilles 16a, 16b peut quant à elle être réalisée en utilisant des boulons 18 (figures 2 à 4) bridant les coquilles 16a, 16b l'une contre l'autre. Ce même joint 17 peut aussi permettre d'assurer l'étanchéité du logement malgré la sortie de câbles électriques 30 (figure 2 à 3) reliés au stator 3a, 3b de sorte à en prélever le courant électrique généré.

Selon une mise en œuvre particulière, le stator comporte au moins un anneau 3a de préférence disposé d'un côté du rotor 2, et notamment deux anneaux 3a, 3b disposés de part et d'autre du rotor 2. Lorsque deux anneaux 3a, 3b sont disposés de part et d'autre du plan de rotation du rotor 2, le dispositif de génération de courant est dit à flux magnétique axial (alternativement, un anneau peut entourer le rotor de sorte à former un dispositif de génération de courant à flux magnétique radial). Chaque anneau 3a, 3b comporte un circuit apte à générer tout ou partie du courant électrique (tout si un unique anneau, et une partie si deux anneaux) lorsqu'il est excité par au moins un élément magnétique du rotor 2. Chaque circuit peut comporter une pluralité de bobines reliées en séries, alternativement chaque circuit est formé par des bobines planaires reliées en série. Sur les figures 2 à 4, les deux anneaux 3a, 3b sont logés dans le logement 6 (notamment dans des empreintes correspondantes du logement formées respectivement dans la première coquille 16a et la deuxième coquille 16b). Préférentiellement, le diamètre intérieur du ou des anneaux est tel qu'il est supérieur au diamètre de l'élément de tuyau, de plus les deux anneaux 3a, 3b sont avantageusement coaxiaux à l'élément de tuyau 1 (en particulier coaxiaux à la première partie 1a de tuyau et à la deuxième partie 1b de tuyau) de sorte à ne pas entraver le passage du fluide au niveau du logement 6.

Selon une mise en œuvre particulière du rotor 2 (figures 2 à 4), ce dernier peut comporter une couronne 19 rotative munie d'au moins un, ou d'une pluralité, d'élément(s) magnétique(s) 19a. En fait, lorsque le rotor 2 comporte une hélice munie de plusieurs pales 20 (figures 2 à 4), les pales 20 sont toutes reliées d'une part à un moyeu 21 de l'hélice monté sur l'axe de rotation 4 (notamment de manière solidaire en mouvement, la rotation de l'axe de rotation 4 entrainant la rotation du moyeu 21 et donc du reste du rotor 2) et, d'autre part à ladite couronne 19. La couronne 19 peut alors délimiter le cercle de rotation dans lequel s'inscrit la rotation du rotor 2.

Le positionnement des deux anneaux 3a, 3b entre eux et avantageusement par rapport au rotor 2 permet aussi d'améliorer le rendement du dispositif de génération du courant électrique. En ce sens, le dispositif peut comporter un système de maintien de l'écartement des deux anneaux 3a, 3b disposés de part et d'autre du plan de rotation P1 du rotor 2.

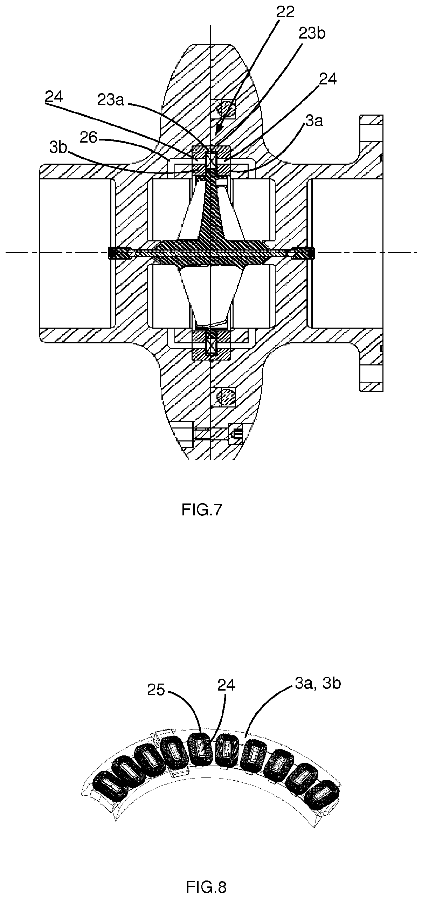

En particulier, comme illustré à la figure 7, le système de maintien 22 comporte une entretoise reliant les deux anneaux 3a, 3b. En particulier, l'entretoise est formée par un premier rebord 23a s'étendant de l'anneau 3a et par un deuxième rebord 23b s'étendant de l'anneau 3b. Lorsque les extrémités libres des premier et deuxième rebords 23a, 23b sont en contact, l'entretoise est formée. Autrement dit, l'entretoise peut être formée par deux parties chacune solidaire d'un anneau correspondant.

De préférence, le stator 3a, 3b n'inclut pas d'élément ferromagnétique destiné à orienter le flux magnétique induit par le rotor 2. Ceci permet d'obtenir un dispositif plus compact et plus facile à refroidir. Ceci est avantageux lorsque le dispositif est dit à flux axial.

La présence d'élément(s) ferromagnétique(s) est avantageuse lorsque l'on cherche à redresser le champ magnétique du rotor. Cependant cette présence peut induire des effets de collage entre le stator et le rotor. Ainsi, dans les configurations où le collage n'est pas un problème (par exemple un agencement du rotor avec le stator à flux radial) ou qu'il peut être évité, le dispositif peut comporter un ou plusieurs éléments ferromagnétiques agissant sur le champ magnétique du rotor en vue de l'orienter. Un élément ferromagnétique peut être recouvert de résine de sorte à ne pas être oxydé par le fluide.

On comprend de ce qui a été dit ci-dessus que le courant électrique est généré par l'interaction entre le stator et le rotor, et notamment par l'interaction de champs magnétiques tournant issus d'un ou plusieurs aimants portés par le rotor avec un, ou des, circuits du, ou des, anneaux du stator. Cette interaction peut provoquer un échauffement du stator 3a, 3b réduisant le rendement de la production de courant électrique. Il en résulte une problématique de refroidissement du stator 3a, 3b. Cette problématique peut être résolue par le fait que le stator 3a, 3b est agencé de sorte qu'une partie du fluide (aussi appelée partie secondaire du fluide) participe au refroidissement dudit stator lors de son passage dans ledit dispositif. En fait, lorsque le fluide passe de la première partie de tuyau 1a au logement 6, une partie principale du fluide traverse le rotor 2 et le stator 3a, 3b de sorte à arriver dans la deuxième partie de tuyau 1b et une partie secondaire du fluide tend à remplir le logement 6 de sorte à être en contact avec le stator 3a, 3b et l'extrémité du rotor 2.

Selon une première réalisation du refroidissement du stator 3a, 3b illustrée aux figures 7 et 8, au moins un passage 24 est aménagé dans le stator de sorte à le refroidir en permettant une circulation de la partie de fluide au travers dudit passage 24. En particulier, le circuit de chaque anneau 3a, 3b comporte au moins une bobine 25, ledit au moins un passage 24 étant formé le long de l'axe de bobinage de ladite bobine 25. Préférentiellement chaque anneau 3a, 3b comporte une pluralité de bobines 25, notamment reliées en série, et tout ou partie de la pluralité de bobines 25 est associé à un passage 24 destiné à participer au refroidissement de la bobine 25 concernée. De préférence, le dispositif comporte une conduite de dérivation 26 (figure 7) permettant de prélever la partie de fluide destinée à refroidir le stator en amont du logement 6 et de distribuer ladite partie de fluide au niveau du stator 3a, par exemple directement dans le, ou les, passage(s) 24 ou le long de la surface extérieure du stator. La même chose peut être présente en aval du rotor 2 comme l'illustre la figure 7.

Selon une deuxième réalisation du refroidissement du stator 3a, 3b, ce dernier présente une surface extérieure, notamment disposée en regard du rotor 2, en contact avec ladite partie de fluide et permettant un refroidissement par convection. En fait, dans ce cas, le circuit peut être simplement recouvert par une peinture époxy ou polyuréthane assurant l'isolation électrique du circuit par rapport au fluide. Plus généralement, chaque circuit peut être enrobé par un matériau électriquement isolant, notamment de telle sorte que l'enrobage présente une résistance thermique de convection adaptée au refroidissement souhaité.

Les première et deuxième réalisations du refroidissement peuvent bien entendu être combinées.

Selon un autre objet de l'invention, un kit pour instrumentaliser une canalisation comporte un dispositif tel que décrit précédemment selon n'importe laquelle de ses variantes/réalisations. Le dispositif est dans ce cas démontable, et le kit comporte au moins deux types de stator et/ou au moins deux types de rotor. Ainsi, il est facile à un installateur de choisir une configuration précise du dispositif notamment en fonction du type de fluide utilisé et/ou de la vitesse de l'écoulement du fluide dans la canalisation pour maximiser le rendement du courant électrique généré à partir de l'écoulement du fluide.

De manière générale, le dispositif est tel qu'il est avantageusement adapté aux canalisations d'un diamètre compris entre 50mm et 2000mm.

Par ailleurs, le fluide lorsqu'il se présente à l'entrée de l'élément de tuyau en amont du rotor a typiquement un débit inférieur à 6m/s et de préférence compris entre 0 et 2,5m/s.

Selon un autre objet de l'invention, une installation peut être munie d'une canalisation de circulation d'un fluide dans laquelle le fluide circule, ladite canalisation comportant au moins un dispositif de génération de courant électrique tel que décrit. Ainsi, la circulation du fluide dans le dispositif de génération de courant électrique permet de générer ledit courant par entrainement du rotor en rotation.

Plus particulièrement, on comprend que le dispositif peut être configuré de telle sorte à être adapté à un réseau d'eau. Un réseau d'eau comprend un système de canalisations permettant d'acheminer l'eau entre au moins deux points et de la distribuer à un utilisateur. Autrement dit, le dispositif de génération du courant ne nécessite pas que l'installation qui le comporte soit munie d'une colonne d'eau augmentant de manière très importante la pression telle qu'on la trouve dans une installation de type barrage. Ainsi, l'installation évoquée ci-dessus peut être une installation de distribution d'eau, par exemple d'eau potable comme le réseau de distribution d'eau d'une ville.

On comprend aussi que selon un mode de réalisation combinable avec tout ce qui est dit dans la présente description dans le cadre où le fluide est issu d'un réseau d'eau, le rotor du dispositif de génération du courant est donc configuré de telle sorte que son interaction avec le fluide (donc l'eau) s'écoulant dans le réseau d'eau soit suffisante pour l'entraîner en rotation et générer ledit courant électrique.

De manière générale, le courant électrique généré peut être injecté dans un réseau électrique.

On comprend aussi qu'un tel dispositif peut être avantageusement utilisé pour fournir en énergie électrique un point donné le long d'un réseau de distribution du fluide où l'électricité n'est pas disponible.

## Revendications

1. Dispositif de génération d'un courant électrique destiné à former une partie d'une canalisation de circulation d'un fluide, notamment liquide, ledit dispositif comporte un élément de tuyau (1), un rotor (2) apte a être mis en mouvement par le fluide lors de son passage dans ledit dispositif et un stator (3a, 3b) agencé pour coopérer avec une extrémité du rotor (2) opposée à un axe de rotation (4) dudit rotor (2) afin de générer le courant électrique lors dudit mouvement, ledit axe de rotation (4) étant monté à ses extrémités longitudinales opposées (4a, 4b) sur des premier et deuxième supports (5a, 5b) disposés de part et d'autre du plan de rotation (P1) du rotor (2) et chacun relié à l'élément de tuyau (1), **caractérisé en ce que** le stator comporte au moins un anneau (3a) disposé d'un côté du rotor (2), notamment deux anneaux (3a, 3b) disposés de part et d'autre du rotor (2), et **en ce que** chaque anneau (3a, 3b) comporte un circuit apte à générer tout ou partie du courant électrique lorsqu'il est excité par au moins un élément magnétique du rotor (2), le premier support (5a) et/ou le deuxième support (5b) comportant un système de réglage (7) de la distance de séparation des premier et deuxième supports (5a, 5b), en vue de régler la position du plan de rotation (P1) du rotor (2) entre les premier et deuxième supports (5a, 5b).

2. Dispositif selon la revendication précédente, **caractérisé en ce qu'**il comporte un logement (6) dans lequel sont disposés le rotor (2) et le stator (3a, 3b), l'élément de tuyau (1) comprenant une première partie de tuyau (1a) et une deuxième partie de tuyau (1b) disposées de part et d'autre du logement (6), notamment les première et deuxième parties de tuyau (1a, 1b) sont coaxiales entre elles et avec l'axe de rotation (4) du rotor (2).

3. Dispositif selon la revendication 2, **caractérisé en ce qu'**il comporte des première et deuxième coquilles (16a, 16b) assemblées, de préférence de manière démontable, l'une à l'autre de sorte à former le logement (6), la première coquille (16a) comporte la première partie de tuyau (1a) et la deuxième coquille (16b) comporte la deuxième partie de tuyau (1b).

4. Dispositif selon l'une quelconque des revendications précédentes, **caractérisé en ce que** le stator (3a, 3b) est agencé de sorte qu'une partie du fluide participe au refroidissement dudit stator (3a, 3b) lors de son passage dans ledit dispositif.

5. Dispositif selon la revendication précédente, **caractérisé en ce qu'**au moins un passage (24) est aménagé dans le stator (3a, 3b) de sorte à le refroidir en permettant une circulation de la partie de fluide au travers dudit passage (24).

6. Dispositif selon la revendication précédente, **caractérisé en ce que** le circuit de chaque anneau (3a, 3b) comporte au moins une bobine (25), ledit au moins un passage (24) étant formé le long de l'axe de bobinage de ladite bobine (25).

7. Dispositif selon l'une des revendications 4 à 6, **caractérisé en ce que** le stator (3a, 3b) présente une surface extérieure, notamment disposée en regard du rotor (2), en contact avec ladite partie de fluide et permettant un refroidissement par convection.

8. Dispositif selon l'une quelconque des revendications précédentes, **caractérisé en ce qu'**au moins une extrémité longitudinale de l'axe de rotation (4), en contact avec le premier, ou le deuxième, support (5a, 5b) correspondant est distante du plan de rotation (P1) du rotor (2) d'une distance supérieure ou égale au rayon du rotor (2).

9. Dispositif selon l'une quelconque des revendications précédentes, **caractérisé en ce que** le premier support (5a) comporte une surface de contact avec l'axe de rotation (4) du rotor (2) formée par une partie d'une surface sphérique, notamment délimitée par une bille (11a) intégrée au premier support (5a), et **en ce que** le deuxième support (5b) comporte une deuxième surface de contact avec l'axe de rotation (4) du rotor (2) formée par une partie d'une surface sphérique, notamment délimitée par une autre bille (11b) intégrée au deuxième support (5b).

10. Dispositif selon la revendication précédente, **caractérisé en ce que** les premier et deuxième supports (5a, 5b) comportent chacun une cavité s'étendant entre la première surface de contact, respectivement la deuxième surface de contact, et une ouverture associée permettant l'insertion d'une partie correspondante de l'axe de rotation (4), chaque cavité comprenant un premier tronçon (12a) de section cylindrique et un deuxième tronçon (12b) de forme, de préférence conique, s'évasant à partir du premier tronçon (12a) en direction de l'ouverture, et **en ce que**, pour chaque cavité, ladite partie correspondante de l'axe de rotation (4) est logée dans ladite cavité et présente une forme complémentaire à ladite cavité.

11. Dispositif selon l'une quelconque des revendications précédentes, **caractérisé en ce qu'**il comporte un système de maintien (22) de l'écartement des deux anneaux (3a, 3b) disposés de part et d'autre du plan de rotation (P1) du rotor (2).

12. Dispositif selon la revendication précédente, **caractérisé en ce que** le système de maintien (22) comporte une entretoise (23) reliant les deux anneaux (3a, 3b) notamment l'entretoise comporte deux parties chacune solidaire d'un anneau (3a, 3b) correspondant.

13. Kit pour instrumentaliser une canalisation comportant un dispositif selon l'une quelconque des revendications précédentes, ledit dispositif étant démontable, le kit comporte au moins deux types de stator et/ou au moins deux types de rotor.

14. Installation munie d'une canalisation de circulation d'un fluide dans laquelle le fluide circule, **caractérisé en ce que** ladite canalisation comporte au moins un dispositif de génération de courant électrique selon l'une quelconque des revendications 1 à 12.

## Patentansprüche

1. Vorrichtung zur Stromerzeugung, die dazu bestimmt ist, einen Teil eines Rohres zum Zirkulieren eines Fluids, insbesondere eines flüssigen, zu bilden, wobei die Vorrichtung ein Rohrelement (1), einen Rotor (2), der durch das Fluid in Bewegung gesetzt werden kann, während es die Vorrichtung durchläuft, und einen Stator (3a, 3b) umfasst, der angeordnet ist, um mit einem Ende des Rotors (2) gegenüber einer Rotationsachse (4) des Rotors (2) zusammenzuwirken, um während der Bewegung Strom zu erzeugen, wobei die Rotationsachse (4) an ihren gegenüberliegenden Längsenden (4a, 4b) auf ersten und zweiten Trägern (5a, 5b) montiert ist, die auf beiden Seiten der Rotationsebene (P1) des Rotors (2) angeordnet und jeweils mit dem Rohrelement (1) verbunden sind, **dadurch gekennzeichnet, dass** der Stator mindestens einen Ring (3a) umfasst, der auf einer Seite des Rotors (2) angeordnet ist, insbesondere zwei Ringe (3a, 3b), die auf beiden Seiten des Rotors (2) angeordnet sind, und dass jeder Ring (3a, 3b) eine Schaltung umfasst, die in der Lage ist, den Strom ganz oder teilweise zu erzeugen, wenn sie durch mindestens ein Magnetelement des Rotors (2) angeregt wird, wobei der erste Träger (5a) und/oder der zweite Träger (5b) ein System zum Einstellen (7) des Trennungsabstandes des ersten und zweiten Trägers (5a, 5b) umfasst, um die Position der Rotationsebene (P1) des Rotors (2) zwischen dem ersten und zweiten Träger (5a, 5b) einzustellen.

2. Vorrichtung nach dem vorhergehenden Anspruch, **dadurch gekennzeichnet, dass** sie eine Aufnahme (6) umfasst, in der der Rotor (2) und der Stator (3a, 3b) angeordnet sind, wobei das Rohrelement (1) einen ersten Rohrteil (1a) und einen zweiten Rohrteil (1b) umfasst, die auf beiden Seiten der Aufnahme (6) angeordnet sind, wobei insbesondere der erste und der zweite Rohrteil (1a, 1b) koaxial zueinander und mit der Rotationsachse (4) des Rotors (2) sind.

3. Vorrichtung nach Anspruch 2, **dadurch gekennzeichnet, dass** sie erste und zweite Schalen (16a, 16b) umfasst, die, vorzugsweise abnehmbar, miteinander verbunden sind, um die Aufnahme (6) zu bilden, wobei die erste Schale (16a) den ersten Rohrteil (1a) und die zweite Schale (16b) den zweiten Rohrteil (1b) umfasst.

4. Vorrichtung nach einem der vorhergehenden Ansprüche, **dadurch gekennzeichnet, dass** der Stator (3a, 3b) so angeordnet ist, dass ein Teil des Fluids beim Durchlaufen der Vorrichtung an der Kühlung des Stators (3a, 3b) beteiligt ist.

5. Vorrichtung nach dem vorhergehenden Anspruch, **dadurch gekennzeichnet, dass** im Stator (3a, 3b) mindestens ein Durchlauf (24) angeordnet ist, um diesen zu kühlen, indem eine Zirkulation des Teils des Fluids durch den Durchlauf (24) ermöglicht wird.

6. Vorrichtung nach dem vorhergehenden Anspruch, **dadurch gekennzeichnet, dass** die Schaltung jedes Rings (3a, 3b) mindestens eine Spule (25) umfasst, wobei der mindestens eine Durchlauf (24) entlang der Wickelachse der Spule (25) gebildet ist.

7. Vorrichtung nach einem der Ansprüche 4 bis 6, **dadurch gekennzeichnet, dass** der Stator (3a, 3b) eine Außenfläche aufweist, die insbesondere gegenüber dem Rotor (2) angeordnet ist und in Kontakt mit dem Teil des Fluids steht und eine Konvektionskühlung ermöglicht.

8. Vorrichtung nach einem der vorhergehenden Ansprüche, **dadurch gekennzeichnet, dass** mindestens ein Längsende der Rotationsachse (4) in Kontakt mit dem ersten oder zweiten entsprechenden Träger (5a, 5b) zur Rotationsebene (P1) des Rotors (2) um einen Abstand größer oder gleich dem Radius des Rotors (2) beabstandet ist.

9. Vorrichtung nach einem der vorhergehenden Ansprüche, **dadurch gekennzeichnet, dass** der erste Träger (5a) eine Kontaktfläche mit der Rotationsachse (4) des Rotors (2) aufweist, die durch einen Teil einer kugelförmigen Oberfläche gebildet und insbesondere durch eine in den ersten Träger (5a) integrierte Kugel (11a) begrenzt ist, und dass der zweite Träger (5b) eine zweite Kontaktfläche mit der Rotationsachse (4) des Rotors (2) aufweist, die durch einen Teil einer kugelförmigen Oberfläche gebildet und insbesondere durch eine andere in den zweiten Träger (5b) integrierte Kugel (11b) begrenzt ist.

10. Vorrichtung nach dem vorhergehenden Anspruch, **dadurch gekennzeichnet, dass** der erste und zweite Träger (5a, 5b) jeweils einen Hohlraum aufweisen, der sich zwischen der ersten Kontaktfläche bzw. der zweiten Kontaktfläche erstreckt, und eine zugehörige Öffnung, die das Einsetzen eines entsprechenden Teils der Rotationsachse (4) ermöglicht, wobei jeder Hohlraum einen ersten Abschnitt (12a) mit zylindrischem Querschnitt und einen zweiten Abschnitt (12b), vorzugsweise konischer Form, umfasst, der sich vom ersten Abschnitt (12a) in Richtung der Öffnung erweitert, und dass für jeden Hohlraum der entsprechende Teil der Rotationsachse (4) in dem Hohlraum untergebracht ist und eine zu dem Hohlraum komplementäre Form aufweist.

11. Vorrichtung nach einem der vorhergehenden Ansprüche, **dadurch gekennzeichnet, dass** sie ein System zur Aufrechterhaltung (22) des Abstands zwischen den beiden Ringen (3a, 3b) umfasst, die auf beiden Seiten der Rotationsebene (P1) des Rotors (2) angeordnet sind.

12. Vorrichtung nach dem vorhergehenden Anspruch, **dadurch gekennzeichnet, dass** das System zur Aufrechterhaltung (22) einen Abstandshalter (23) umfasst, der die beiden Ringe (3a, 3b) verbindet, insbesondere der Abstandshalter zwei Teile umfasst, die jeweils fest mit einem entsprechenden Ring (3a, 3b) verbunden sind.

13. Bausatz zum Ausstatten eines Rohres, umfassend eine Vorrichtung nach einem der vorhergehenden Ansprüche, wobei die Vorrichtung abnehmbar ist und der Bausatz mindestens zwei Typen von Stator und/oder mindestens zwei Typen von Rotor umfasst.

14. Installation, die mit einem Fluidzirkulationsrohr versehen ist, in dem das Fluid zirkuliert, **dadurch gekennzeichnet, dass** das Rohr mindestens eine Vorrichtung zur Stromerzeugung nach einem der Ansprüche 1 bis 12 umfasst.

## Claims

1. Device for generating an electrical current intended to form a part of a pipeline for the circulation of a fluid, notably liquid, said device comprises a pipe element (1), a rotor (2) suitable for being set in motion by the fluid upon its passage into said device and a stator (3a, 3b) arranged to cooperate with an end of the rotor (2) opposite to an axis of rotation (4) of said rotor (2) in order to generate the electrical current upon said motion, said axis of rotation (4) being mounted at its opposing longitudinal ends (4a, 4b) on first and second supports (5a, 5b) arranged on either side of the plane of rotation (P1) of the rotor (2) and each linked to the pipe element (1), **characterized in that** the stator comprises at least one ring (3a) arranged on one side of the rotor (2), notably two rings (3a, 3b) arranged on either side of the rotor (2), and **in that** each ring (3a, 3b) comprises a circuit suitable for generating all or part of the electrical current when it is excited by at least one magnetic element of the rotor (2), the first support (5a) and/or the second support (5b) comprising a system (7) for setting the distance separating the first and second supports (5a, 5b), in order to set the position of the plane of rotation (P1) of the rotor (2) between the first and second supports (5a, 5b).

2. Device according to the preceding claim, **characterized in that** it comprises a housing (6) in which are arranged the rotor (2) and the stator (3a, 3b), the pipe element (1) comprising a first pipe part (1a) and a second pipe part (1b) arranged on either side of the housing (6), notably the first and second pipe parts (1a, 1b) are coaxial to one another and with the axis of rotation (4) of the rotor (2).

3. Device according to Claim 2, **characterized in that** it comprises first and second shells (16a, 16b) joined, preferably in a dismantleable manner, to one another so as to form the housing (6), the first shell (16a) comprises the first pipe part (1a) and the second shell (16b) comprises the second pipe part (1b).

4. Device according to any one of the preceding claims, **characterized in that** the stator (3a, 3b) is arranged such that a part of the fluid participates in the cooling of said stator (3a, 3b) upon its passage into said device.

5. Device according to the preceding claim, **characterized in that** at least one passage (24) is formed in the stator (3a, 3b) so as to cool it by allowing a circulation of the part of fluid through said passage (24).

6. Device according to the preceding claim, **characterized in that** the circuit of each ring (3a, 3b) comprises at least one coil (25), said at least one passage (24) being formed along the winding axis of said coil (25).

7. Device according to one of Claims 4 to 6, **characterized in that** the stator (3a, 3b) has an outer surface, notably arranged facing the rotor (2), in contact with said part of fluid and allowing a cooling by convection.

8. Device according to any one of the preceding claims, **characterized in that** at least one longitudinal end of the axis of rotation (4), in contact with the first, or the second, corresponding support (5a, 5b) is distant from the plane of rotation (P1) of the rotor (2) by a distance greater than or equal to the radius of the rotor (2).

9. Device according to any one of the preceding claims, **characterized in that** the first support (5a) comprises a surface of contact with the axis of rotation (4) of the rotor (2) formed by a part of a spherical surface, notably delimited by a ball (11a) incorporated in the first support (5a), and **in that** the second support (5b) comprises a second surface of contact with the axis of rotation (4) of the rotor (2) formed by a part of a spherical surface, notably delimited by another ball (11b) incorporated in the second support (5b).

10. Device according to the preceding claim, **characterized in that** the first and second supports (5a, 5b) each comprise a cavity extending between the first surface of contact, respectively the second surface of contact, and an associated opening allowing the insertion of a corresponding part of the axis of rotation (4), each cavity comprising a first section (12a) of cylindrical section and a second section (12b) of preferably conical form, widening from the first section (12a) towards the opening, and **in that**, for each cavity, said corresponding part of the axis of rotation (4) is housed in said cavity and has a form complementing said cavity.

11. Device according to any one of the preceding claims, **characterized in that** it comprises a system (22) for maintaining the distance separating the two rings (3a, 3b) arranged on either side of the plane of rotation (P1) of the rotor (2).

12. Device according to the preceding claim, **characterized in that** the maintaining system (22) comprises a spacer (23) linking the two rings (3a, 3b), notably the spacer comprises two parts each secured to a corresponding ring (3a, 3b).

13. Kit for using a pipeline comprising a device according to any one of the preceding claims, said device being dismantleable, the kit comprises at least two types of stator and/or at least two types of rotor.

14. Installation provided with a pipeline for circulation of a fluid in which the fluid circulates, **characterized in that** said pipeline comprises at least one electrical current generation device according to any one of Claims 1 to 12.
